# EUROPEAN PATENT APPLICATION

(11) **EP 3 831 531 A1**
(43) Date of publication of application: **09.06.2021**
(21) Application number: 20210049.1
(22) Date of filing: 26.11.2020
(51) Int. Cl.: B24B 7/19, B24B 7/28, B24B 19/24, B24B 19/00, B24B 51/00, G05B 17/00, G05B 19/00, B24B 7/30

(54) **WORKING MACHINE FOR WOODEN PIECES AND THE LIKE, PROVIDED WITH A WORKING SIMULATION PROGRAM, AND OPERATING METHOD THEREOF**

(30) Priority: 02.12.2019 IT 201900022710
(71) Applicant: SCM Group S.p.A., 47921 Rimini (RN) (IT)
(72) Inventor: VENTURINI, Marco, 47921 RIMINI (IT)
(74) Representative: Tiburzi, Andrea

(57) **Abstract**

The present invention relates to a machine (M) for working pieces (P) made of wood, metal, plastic, ceramic, glass, fiberglass, for carrying out a machining on said piece (P) like a manual machining, comprising:
a working unit (2) provided with working tools (21);
a work bench (1) for supporting and moving said piece (P) to be machined, according to a feed direction (A), during the machining;
a logic control unit (U) provided with storage means, in which predefined curves and machining profiles are stored, each one corresponding to an effective final machining to be obtained on said piece (P);
interface means (3), operatively connected to said logic control unit (U), capable of allowing an operator to select at least one of said predefined machining curves, for obtaining a defined final machining on said piece (P);
said machine being characterized in that said logic control unit (U) is provided with a simulation program capable of
receiving said at least one predefined machining curve in input, selected by the operator,
carrying out a final machining simulation to carry out on said piece (P),
displaying said simulation on said interface means (3), and
carrying out the machining of said piece (P) according to said selected predefined machining curve.

The present invention also relates to the operating method of said machine (M).

## Description

The present invention relates to a working machine for pieces made of wood, glass, fiberglass, ceramic, plastic, and the like, provided with a machining simulation program, in particular with a program for the gouging of pieces.

The present invention also relates to the operating method of the machine.

More specifically, the invention relates to a machine of the aforesaid type, provided with a machining simulation program, designed and realized in particular to carry out polishing, and in particular the gouging of wooden pieces, but which can be used for any type of machining, for which the simulation of the machining can be viewed before proceeding to the final machining.

Gouging means a particular type of processing or polishing, in which the machined surface is not perfectly flat, but with more or less variously inclined regions, even in an irregular and random way, for example, to provide a result similar to handmade workmanship.

In the following, the description will be addressed to the simulation of the gouging of wooden pieces, but it is quite clear that it should not be considered limited to this specific use.

As it is currently well known, the machines which carry out sanding in general and gouging in particular on wooden pieces generally comprise a mobile work bench, on which the piece to be worked is placed on during the movement of the piece itself, therefore it is a passing through machining type.

Furthermore, known machines comprise a sanding unit, and a typically cylindrical rotating gouge, comprising a plurality of cutting elements, which is moved by motor means according to predefined programs and according to predefined machining profiles, to obtain the desired final machining.

It is also possible that the processing by the gouge group is left to chance, thus obtaining unpredictable final processing.

Known machines also comprise a user interface, in which the operator selects one or more predetermined machining profiles or curves that the gouging unit can perform, to obtain a certain final machining, such as for example a particular repeated design.

In known machines, however, when the operator selects one or more profiles, the gouge group starts working on the piece, making it impossible to know the final result before the actual final machining.

It often occurs that the actual final machining does not correspond to the determined final machining, therefore, the operator is forced to perform the machining profile selection operation again, and restart the machining.

It is clear that this procedure is expensive both in terms of the time taken by the operator to identify exactly the processing profiles necessary to obtain the final processing determined, and in terms of waste material generated, if more processing attempts are required before obtaining the desired result.

In the light of the above, it is, therefore, an object of the present invention to provide a machine for processing wooden pieces equipped with a program for simulating the final processing, in order to carry out processing in faster times and without waste of pieces of wood.

Another object of the invention is to provide a method of operation of the machine, which optimizes the final machining time of the piece, also minimizing the waste of pieces.

It is therefore specific object of the present invention a machine for working pieces made of wood, metal, plastic, ceramic, glass, fiberglass, for carrying out a machining on said piece like a manual machining, comprising: a working unit provided with working tools; a work bench for supporting and moving said piece to be machined, according to a feed direction, during the machining; a logic control unit provided with storage means, in which predefined curves and machining profiles are stored, each one corresponding to an effective final machining to be obtained on said piece; interface means, operatively connected to said logic control unit, capable of allowing an operator to select at least one of said predefined machining curves, for obtaining a defined final machining on said piece; said machine being characterized in that said logic control unit is provided with a simulation program capable of receiving said at least one predefined machining curve in input, selected by the operator, carrying out a final machining simulation to carry out on said piece, displaying said simulation on said interface means, and carrying out the machining of said piece according to said selected predefined machining curve.

Further according to the invention, said machine may comprise a smoothing unit for carrying out the machining of said piece.

Still according to the invention, said working unit may be a gouger unit comprising at least one cutting element.

Preferably according to the invention, said working unit may be a gouger unit comprising a plurality of cutting elements arranged side by side, along a rotation axis, transversely to said feed direction.

It is further object of the present invention an operating method of a machine for working pieces made of wood, metal, plastic, ceramic, glass, fiberglass for carrying out a machining on said piece like a manual working, comprising the following steps:
a. selecting at least one predefined machining curve, from those stored in said logic control unit, for carrying out a specific final machining;
b. simulating the final machining to be carried out in said piece;
c. displaying said obtained simulation in said step b.;
d. carrying out the machining of said piece according to said selected predefined machining curve.

Further according to the invention, said method may comprise the following step:
c1. stopping the operation of said machine if said simulation displayed in said step c. does not correspond to said specific final machining.

Still according to the invention, said method may further comprise the following step:
c2. selecting new defined curves before carrying out the defined of said piece, if said simulation displayed in said step c. does not correspond to said final defined working.

The present invention will be now described, for illustrative but not limitative purposes, according to its preferred embodiments, with particular reference to the figures of the enclosed drawings, wherein:
figure 1 illustrates a schematic view of the elements included in the working machine for wooded pieces and the like, provided with a machining simulation program, object of the present invention;
figure 2 illustrates a perspective view of a part of the machine object of the present invention;
figure 3 illustrates a perspective view of an element included in the machine of figure 2;
figure 4 illustrates a schematic view of a machining curve carried out by the machine object of the present invention;
figure 5 illustrates a view of a screen visible on the interface means with which the machine object of the invention is provided;
figure 6 illustrates a schematic view of the simulation of the machining of the tools included in the machine object of the present invention;
figure 7a illustrates a first graph of the simulation of the machining that is carried out by the machine object of the present invention;
figure 7b illustrates a second graph of the simulation of the machining that is carried out by the machine object of the present invention; is
figure 7c illustrates a third graph of the simulation of the machining that is carried out by the machine object of the present invention.

In the various figures, similar parts will be indicated by the same reference numbers.

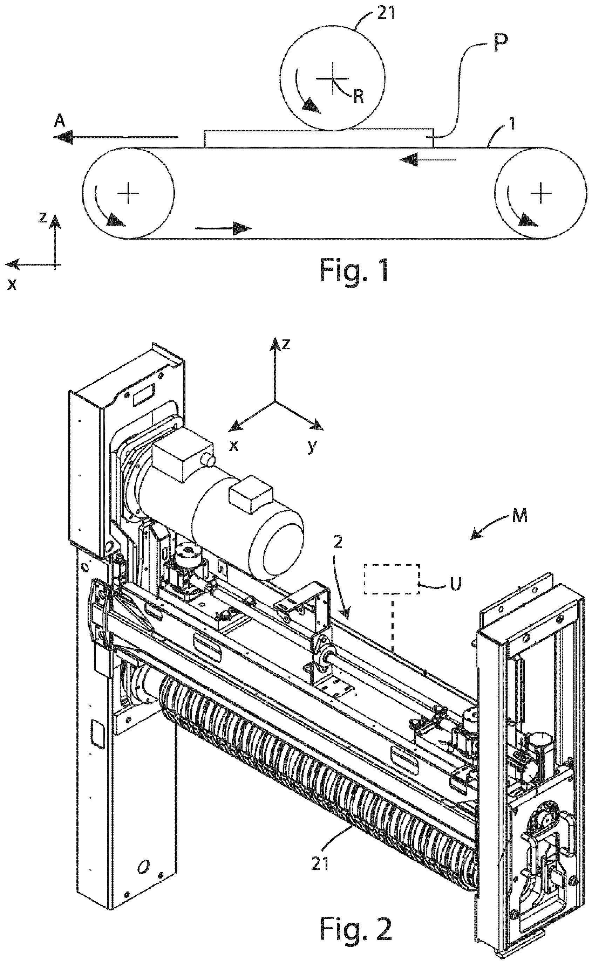

With reference to figures 1 and 2, a working machine has been indicated as a whole with M, in particular a sanding machine that can perform gouging operations on surfaces made of wood, plastic, glass, fiberglass, ceramic, metal and the like, on a piece P.

As already described, gouging means a particular type of polishing, in which the machined surface of the piece P is not perfectly flat, but is provided with more or less variously inclined areas, even according to irregular and random designs, for example, to provide the impression of a handmade workmanship.

The machine M can allow, in particular, to automatically achieve a finishing effect similar to that of a manual sanding.

The machine M essentially comprises a work bench 1, on which the piece P to be machined is placed, a machining head equipped with sanding tools, not shown in the figure, a gouge unit 2, a logic control unit U, for operating the machine M, and interface means 3.

For the clarity of the description, the following expressions are defined, which will be used in the following description.

By actual final machining is meant the final machining of said piece P exiting from said machine M.

By determined end machining is meant a machining to be obtained on the piece P, before said piece P enters into said machine M.

By simulated final machining, as will be described in detail below, is meant the simulation and therefore the visualization of the machining that will take place on said piece P.

Said work bench 1, like an endless conveyor belt or belt wound on pulleys, can slide along an advancement direction A, parallel to the X-axis of the Cartesian reference system XYZ, on which the piece P to be machined is placed while sliding on the work bench 1.

Said gouging unit 2 rotates around a rotation axis R, transversal with respect to said X-axis.

Said gouging unit 2 can comprise at least one cutting element 21 or cutter, movable by means of a support shaft, which is rotated by a motor, not shown in the figure.

It is possible that said gouging unit 2 comprises a plurality of cutting elements 21, in this case these are arranged next to each other, arranged along the direction of the rotation axis R of the gouging unit 2.

Said gouging unit 2 is configured to move vertically along an axis parallel to the Z-axis of the Cartesian reference system XYZ, to vary the depth of cut on the surface of said piece P.

Furthermore, said gouging unit 2 is configured to move laterally along an axis parallel to the Y-axis of the Cartesian reference system.

Said interface means 3 are for example a display or a touch screen, which allow the display and also the entry of parameters by an operator.

Said logic control unit U comprises storage means, in which machining programs, and in particular machining curves or profiles, corresponding to particular machining to be carried out on the piece P, are stored.

Said machining curves can be selected by an operator by means of said interface means 3.

Each machining curve corresponds to a determined + of motion that said at least one gouge unit 2 must follow to carry out the machining of the piece P.

For example, a first law of motion may comprise a certain function of the angular displacement of a rotor of the motor means, which rotate said cutting element 21 as a function of time, or a second law of motion may comprise a certain function of the angular displacement of a rotor of further motor means as a function of time.

By way of example, the first and second laws of motion can comprise, in particular, an oscillatory law applied, for example, to the moving elements of the motor means.

It is also possible to make a random law of motion by means of a randomization, in such a way as to generate an effective final machining on the piece that was not initially foreseeable.

Said logic control unit U is also provided with a simulation program, which is able to simulate the final machining, therefore to generate the simulated final machining, on the basis of the input curves selected by the operator by means of said interface means 3.

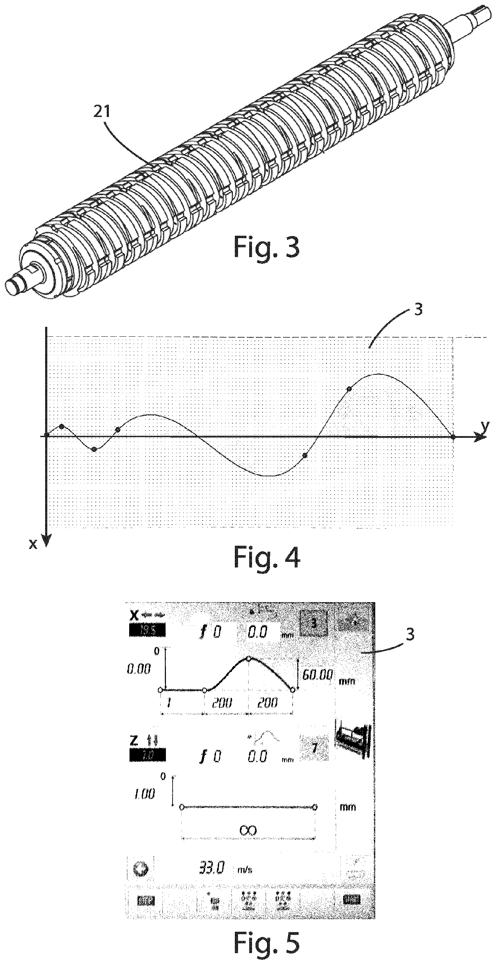

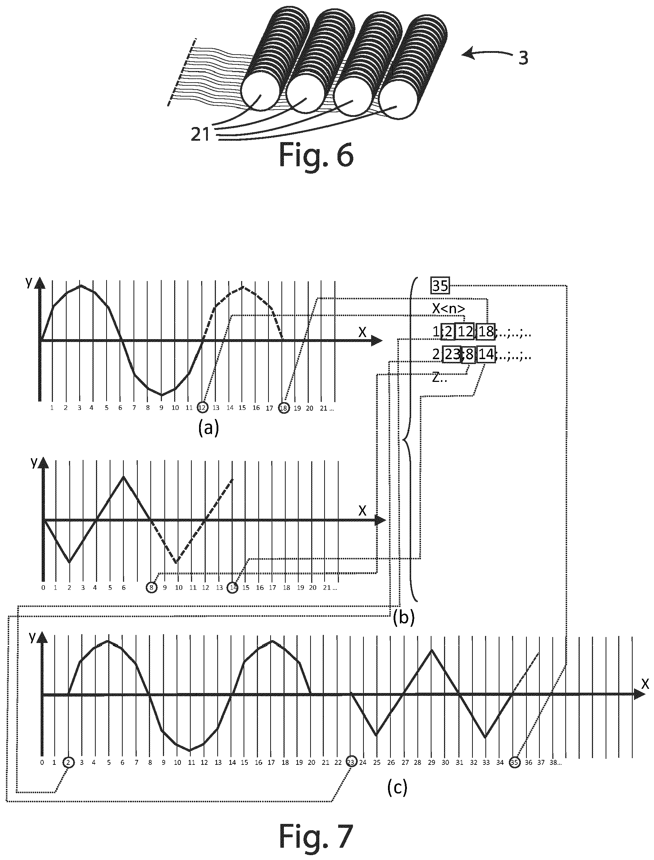

In particular, as shown in figures 4-7, said simulation program converts each curve into a plurality of points that are sent to said display means 3 to display the simulated final machining, corresponding to the machining curves selected by the operator.

Therefore, the operator will be able to know and visualize in advance the final machining that will be performed on the piece P, starting from the machining curves selected by himself by means of said interface means 3.

If the simulated and displayed final machining differs from the determined final machining, the operator can also interrupt the operation of said machine M, and select other machining curves again, until the simulated final machining is identical to the determined final machining.

The operation of the machining machine M for wooden pieces and the like, equipped with a simulation program of the machining described above, is as follows.

When it is intended to carry out a final machining determined on a piece P by means of said machine M, for example, a repetition of geometric designs, or the reproduction of certain natural or manual effects, an operator selects one or more machining curves by means of said interface means 3 included in said machine M.

Said machining curves are processed by said simulation program, which generates a plurality of points on the Cartesian reference plane that reproduce the simulation of the final machining.

Said simulation of the final machining is also displayed on said interface means 3.

Subsequently, said logic control unit U activates the means for moving said gouging unit 2, and said work bench 1 and, when said piece P passes under said gouging unit 2, said one or more cutting elements 21 remove material from the surface of the piece P, according to the machining program, thus carrying out the actual final machining on said piece P.

If said simulation of the final machining displayed on said interface means 3 differs from said determined final machining, the operator can also interrupt the operation of said machine M, and select again further machining curves.

Or, if said simulation of the final machining displayed on said interface means 3 differs from said determined final machining, the operator can select new machining curves, before said machine M begins machining on said piece P, and therefore said machining program simulation repeats the simulation of the final machining.

The operator can therefore view the new simulated final machining on said interface means 3 and, if it corresponds to said determined final machining, he can start the machining of said machine M, otherwise, he can repeat the selection of said machining curves.

As is evident from the above description, the machine M allows to carry out a simulation of the final machining, which will be performed on a piece P, and to display said simulation on interface means.

If the simulated final machining differs from the machining to be obtained, it is possible to interrupt the operation of the machine M, allowing saving of machining times, and saving of incorrectly machined pieces.

The present invention has been described for illustrative but not limitative purposes, according to its preferred embodiments, but it is to be understood that modifications and/or changes can be introduced by those skilled in the art without departing from the relevant scope as defined in the enclosed claims.

## Claims

1. Machine (M) for working pieces (P) made of wood, metal, plastic, ceramic, glass, fiberglass, for carrying out a machining on said piece (P) like a manual machining, comprising:
a working unit (2) provided with working tools (21);
a work bench (1) for supporting and moving said piece (P) to be machined, according to a feed direction (A), during the machining;
a logic control unit (U) provided with storage means, in which predefined curves and machining profiles are stored, each one corresponding to an effective final machining to be obtained on said piece (P);
interface means (3), operatively connected to said logic control unit (U), capable of allowing an operator to select at least one of said predefined machining curves, for obtaining a defined final machining on said piece (P);
said machine being **characterized in that** said logic control unit (U) is provided with a simulation program capable of
receiving said at least one predefined machining curve in input, selected by the operator,
carrying out a final machining simulation to carry out on said piece (P),
displaying said simulation on said interface means (3), and
carrying out the machining of said piece (P) according to said selected predefined machining curve.

2. Machine (M) according to the preceding claim, **characterized in that** it comprises a smoothing unit for carrying out the machining of said piece (P).

3. Machine (M) according to any one of the preceding claims, **characterized in that** said working unit (2) is a gouger unit comprising at least one cutting element (21).

4. Machine (M) according to any one of the preceding claims, **characterized in that** said working unit (2) is a gouger unit comprising a plurality of cutting elements (21) arranged side by side, along a rotation axis (R), transversely to said feed direction (X).

5. Operating method of a machine (M) for working pieces (P) made of wood, metal, plastic, ceramic, glass, fiberglass for carrying out a machining on said piece (P) like a manual working, according to any one of claims 1-4, comprising the following steps:
a. selecting at least one predefined machining curve, from those stored in said logic control unit (U), for carrying out a specific final machining;
b. simulating the final machining to be carried out in said piece (P);
c. displaying said obtained simulation in said step b.;
d. carrying out the machining of said piece (P) according to said selected predefined machining curve.

6. Method according to the preceding claim, **characterized in that** it further comprises the following step
c1. stopping the operation of said machine (M) if said simulation displayed in said step c. does not correspond to said specific final machining.

7. Method according to claim 5, **characterized in that** it further comprises the following step
c2. selecting new defined curves before carrying out the defined of said piece (P), if said simulation displayed in said step c. does not correspond to said final defined working.
